# EUROPEAN PATENT APPLICATION

(11) **EP 2 372 855 A1**
(43) Date of publication of application: **05.10.2011**
(21) Application number: 11002677.0
(22) Date of filing: 31.03.2011
(51) Int. Cl.: H02G 3/08, H02G 3/14

(54) **Wall mounted junction box**

(30) Priority: 01.04.2010 IT MI20100562
(71) Applicant: GEWISS S.p.A., I-24069 Cenate Sotto (Bergamo) (IT)
(72) Inventor: Bosatelli, Domenico, 24069 Centr Sotto (Bergamo) (IT)
(74) Representative: Forattini, Amelia

(57) **Abstract**

A wall mounted junction box, including a casing, a protective shield and a cover; the junction box also includes insulating means having functions as thermal insulators and/or soundproofing and/or as protection against fires (REI grade). The insulating means include an insulating panel applied to the internal and/or external side of the shield and/or of the cover and may also include a screen inserted in the casing.

## Description

The present invention relates to a wall mounted junction box.

As is known, junction boxes recessed in walls are used for electrical connections in the field of civil and industrial installations.

Junction boxes are used to accommodate electrical wiring and devices such as domotic modules, terminal strips, relays, transformers or power supplies.

When the box is fixed to the wall and the conduits have been placed in the chases and inserted in the box, the operator is ready to plaster the wall, generally by means of an apparatus that sprays the mortar onto the wall.

EP-2187492 A1, to this same Applicant, relates to a junction box provided with a mortar guard or shield for protecting the box while working on the wall.

Another function of the shield is to be a thermal and acoustic insulator, when the box is designed to contain noise-emitting devices, such as relays or power supplies.

It is in fact known that electrical devices such as power supplies, transformers and relays are noisy during operation and that noise makes environments uncomfortable.

Also, when the walls in which the junction boxes are installed are too thin, in addition to the problem of noise there is the drawback of the reduction in thermal insulation of the environment caused by the fact that the box reduces the thickness of the wall.

There are also special laws and standard requirements for some types of systems regarding the fire resistance, which is generally determined by means of the REI grade or other similar parameters. The presence of the junction boxes can reduce the level of fire resistance due to the reduction in the thickness of the wall.

US-6252167 discloses an electrical box provided with an intumescent material adapted to suppress fire. The intumescent material expands at the onset of fire. There is no provision of any thermal and acoustic insulation in such electrical box, during normal operation.

GB-2457520 discloses a safety shield for electrical boxes that allows the continuous operation of the box during works on the wall. Such safety shield does not provide any thermal and acoustic Insulation to the electrical box.

WO02/19472 discloses a fire stopping faceplate assembly for an electrical box. There is no provision of any thermal and acoustic insulation in such electrical box.

The aim of the present invention is to provide a junction box that overcomes the drawbacks of the cited prior art.

Within the scope of this aim, an object of the invention is to provide a junction box adapted to acoustically insulate the room from the noise generated by the electrical devices installed in the box and from the noise originating from outside the room.

Another object of the invention is to provide a junction box adapted to thermally insulate the room.

Another object is to provide a junction box that ensures the required protection in case of fire.

Another object of the present invention is to provide a junction box which, by virtue of its particular constructive characteristics, is capable of giving the greatest assurances of reliability and safety in use.

Another object of the present invention is to provide a junction box that can be manufactured by using commonly commercially available elements and materials and is furthermore competitive from an economic standpoint.

This aim and other objects that will become better apparent hereinafter are achieved by a wall mounted junction box.

Further characteristics and advantages will become better apparent from the description of preferred but not exclusive embodiments of the invention, illustrated by way of non-limiting example in the accompanying drawings, wherein:
Figure 1 is an exploded perspective view of a junction box according to the present invention;
Figure 2 is an exploded perspective view of a junction box according to a further aspect of the present invention;
Figure 3 is a perspective view of the box and of a sound-absorbing screen in the extended condition and in the folded condition for insertion in the box;
Figure 4 is an exploded perspective view of a junction box according to a further aspect of the present invention, including a screen which is internal and external to the box;
Figure 5 is an exploded perspective view of a junction box according to a further aspect of the present invention;
Figure 6 is an exploded perspective view of a junction box according to a further aspect of the present invention;
Figure 7 is a perspective view of the application of the mortar-guard according to the present invention to a box which is recessed in a wall prior to the application of mortar to the wall;
Figure 8 is a view, similar to the preceding one, of the tool applied to the box;
Figure 9 is a view, similar to the preceding one, of the wall and of the mortar-guard, both covered with mortar;
Figure 10 is a view, similar to the preceding one, of the step of removal of the mortar by using the perimetric groove as a guide;
Figure 11 is a view, similar to the preceding one, in the condition in which the mortar has been removed from the surface of the tool;
Figure 12 is a view, similar to the preceding one, of the removal of the tool.

With reference to the cited figures, the junction box according to the invention, generally designated by the reference numeral 1, comprises a casing 3, a protective shield 20 and a cover 2.

The shield 20 has engagement means and guiding means, which are provided monolithically along the perimeter of the body and are adapted to allow the stable and temporary association of the shield with the casing 3 recessed in a wall 4.

The application of the shield 20 to the box prevents the protrusion of the conduits from the box.

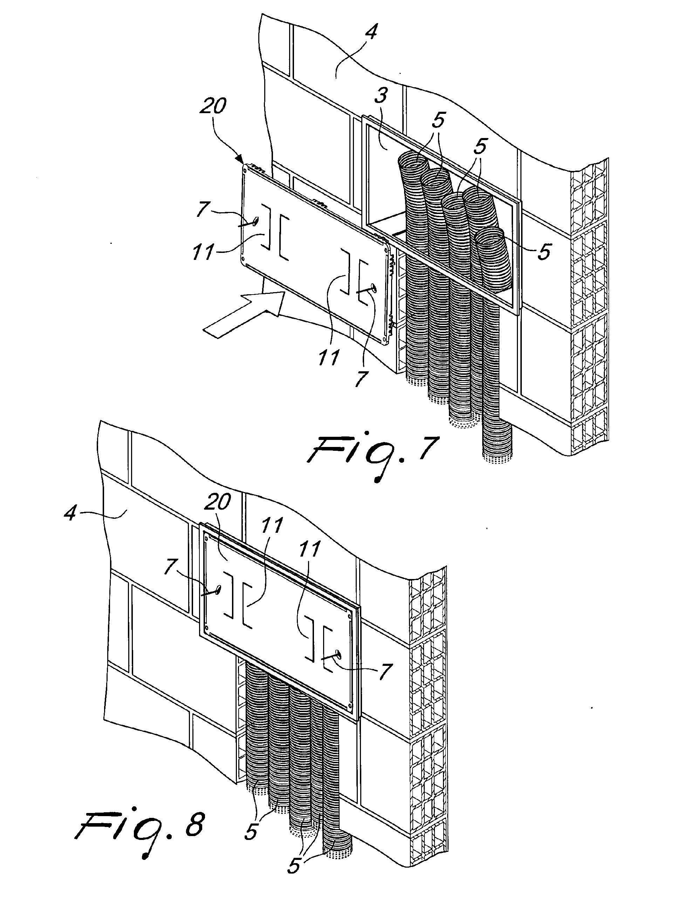

As shown schematically in Figures 7-12, when the casing 3 is fixed to the wall 4 and the tubes 5 are placed in the chases and inserted in the box, the operator is ready to plaster the wall, generally with an apparatus that sprays mortar onto the wall.

At this point, in order to avoid filling the box with mortar, the shield 20 is used and is applied to the casing 3.

Once inserted in the box, the shield 20 is fully recessed, as visible in Figure 8, and it is possible to proceed with the application of the mortar 13.

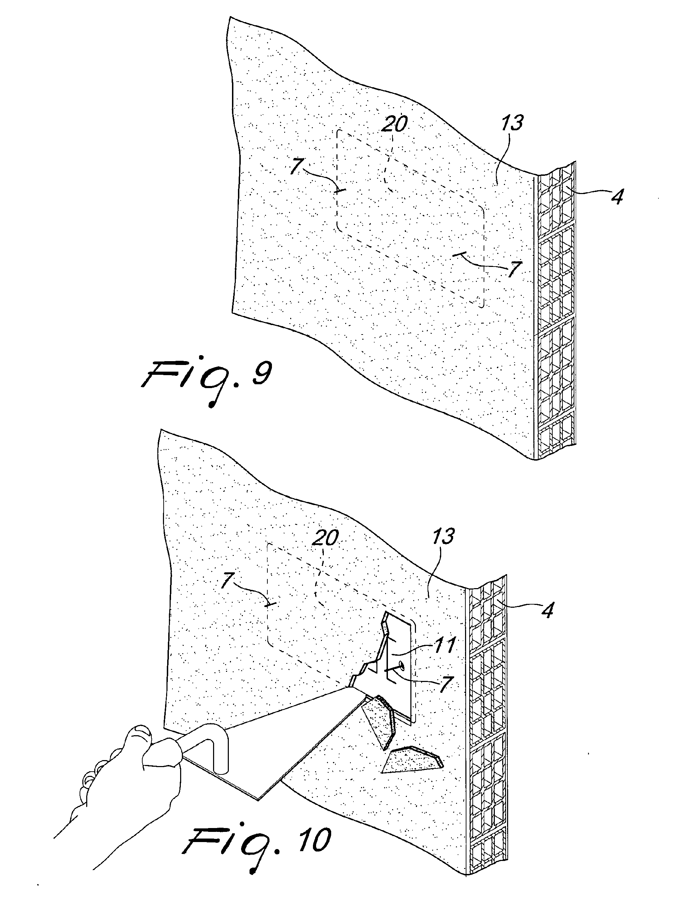

When the mortar has been applied, the only elements that protrude are indicator studs 7, which allow to locate the position of the box when it is fully covered by mortar, as shown schematically in Figure 9.

Once the box has been located by means of the studs 7, a perimetric groove, which runs along the lateral edges of the shield 20, allows to guide the operator in cleaning the surface of the plate by providing an abutment to the tip of the trowel or other tool used to remove the mortar from the surface of the plate, thus avoiding cutting into the mortar in the surrounding regions of the wall, as shown in Figure 10.

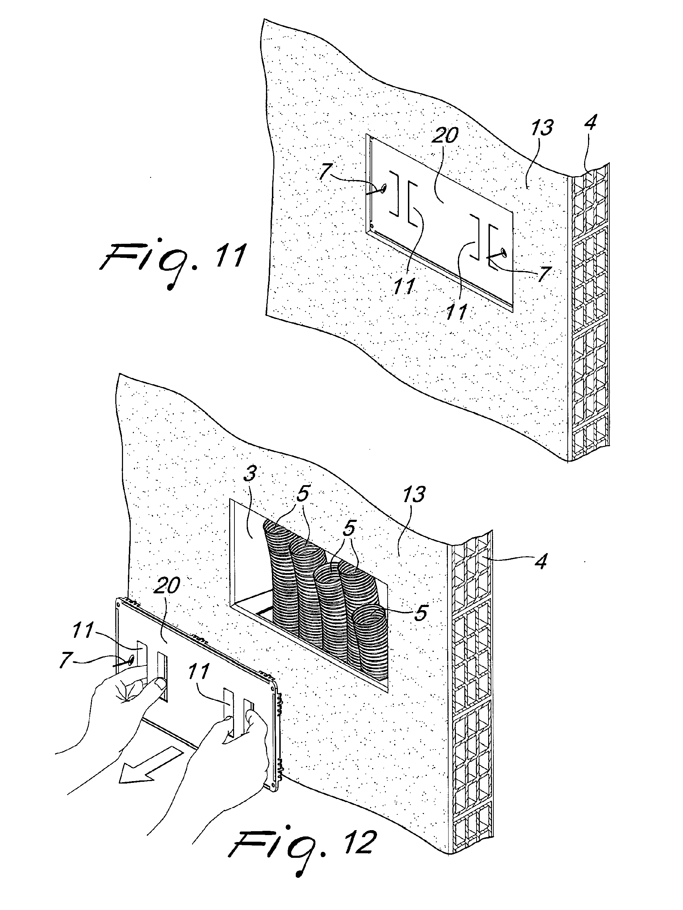

At this point the shield 20 is extracted, gripping the shield by means of flush-fifting handles 11, as shown schematically in Figure 12.

According to the present invention, the box 1 is provided with insulation means which have thermal insulation and/or sound-absorbing and/or fire-resistance functions,

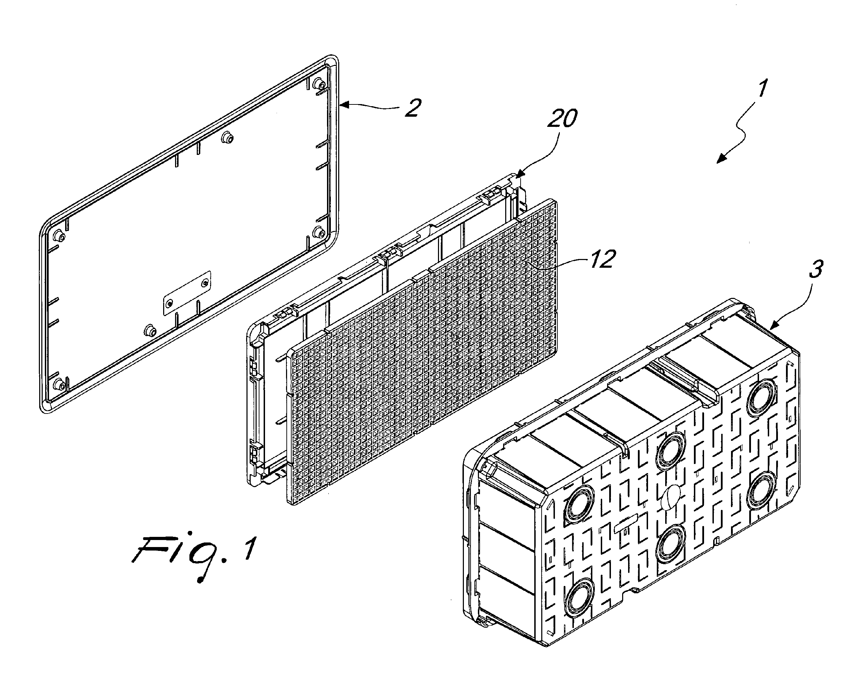

The insulation means may include a panel 12, which is applied to the inner side of the shield 20, as shown in Figure 1,

The panel 12 may be made of a single material with soundproofing and/or thermal insulation and/or fire-resistance characteristics or may be made of a composite material, optionally with self-extinguishing materials.

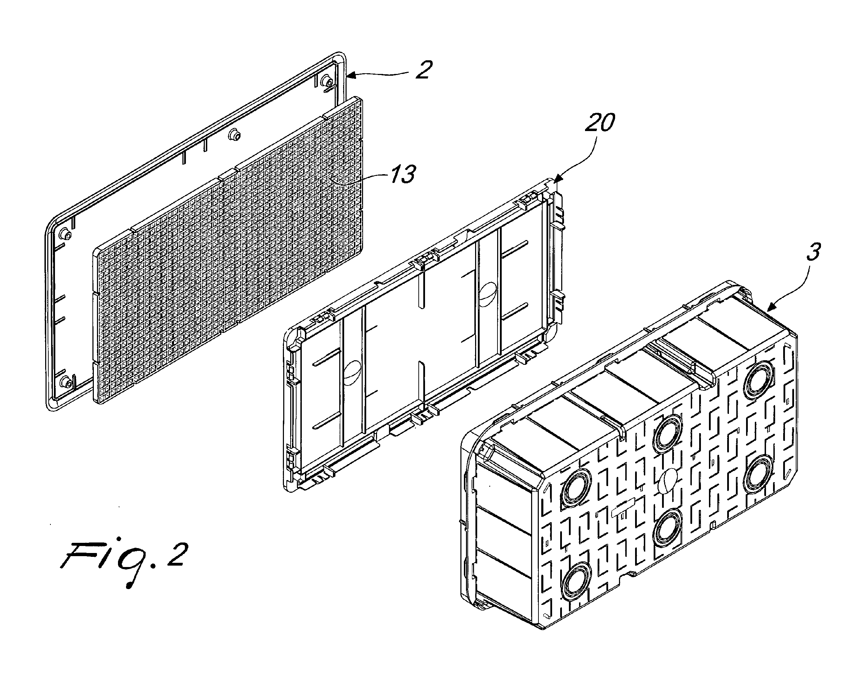

According to a further aspect of the invention, a panel 13 is applied inside the cover 2, as shown in Figure 2, as an alternative or in addition to the panel 12 of the shield.

As the panel 12 of the shield, the panel 13 of the cover may be made of a single material with sound-absorbing and/or thermal insulation and/or fire-resistance characteristics or may be made of a composite material, optionally with self-extinguishing materials.

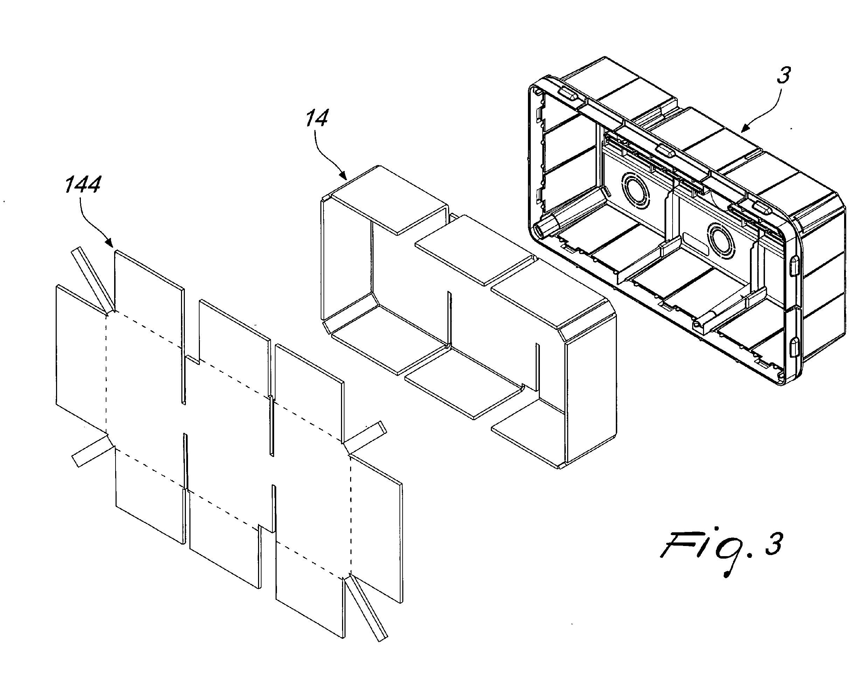

According to a further aspect of the invention, the insulating means may include a screen 14 constituted by a die-cut plate 144, which is shaped prior to its insertion in the casing 3, as shown schematically in Figure 3, constituting a sort of lining of the casing.

The screen 14 is advantageously made of self-extinguishing material or other material with sound-absorbing and/or thermal insulation and/or fire-resistance characteristics.

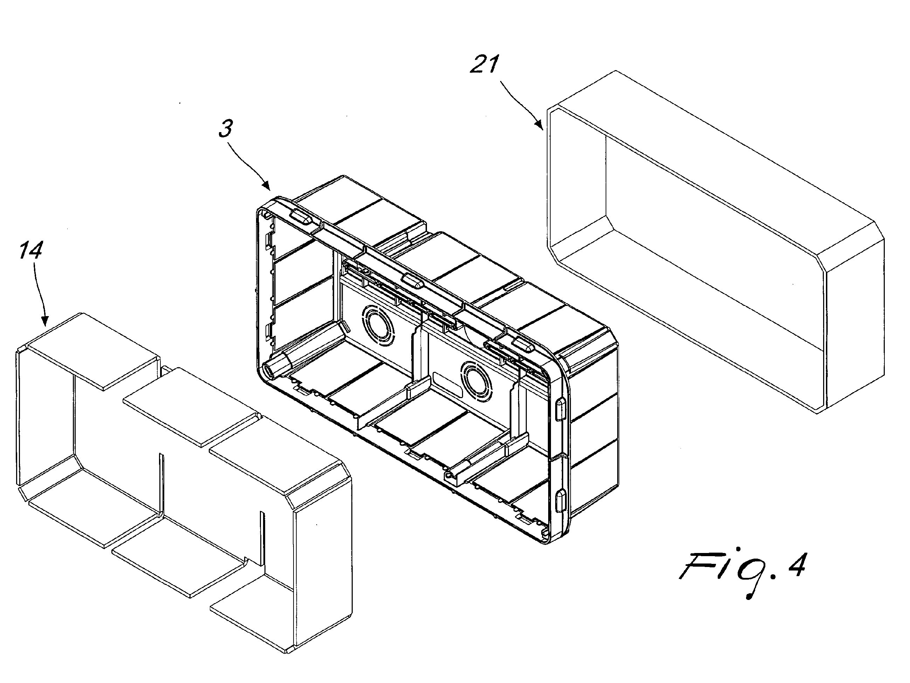

In addition, or as an alternative to the screen 14, the box according to the present invention includes an external screen 21, constituted by a die-cut plate arranged inside the casing 3, as shown in Figure 4.

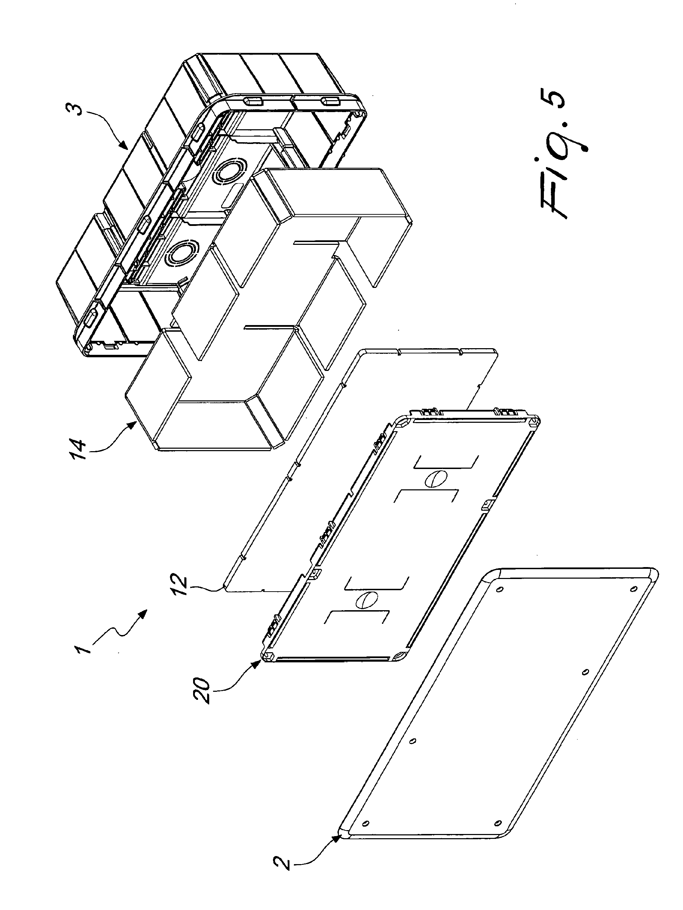

Figure 5 illustrates an embodiment of the invention, wherein the insulating means comprises the screen 14, inserted in the casing 3, and the panel 12 applied to the shield 20.

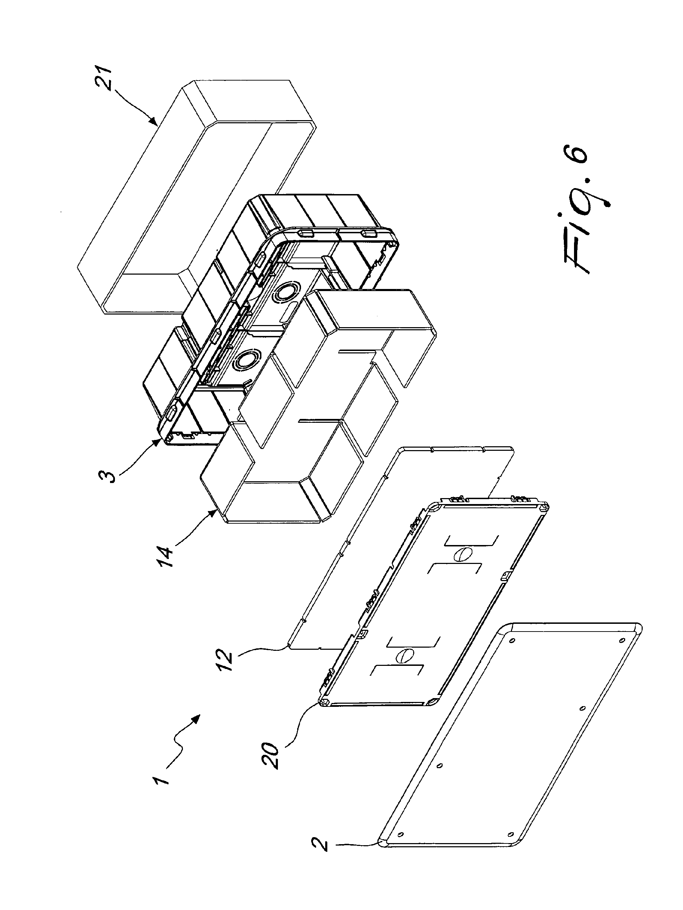

Figure 6 illustrates a further embodiment of the invention, wherein the insulating means comprises the screen 14, inserted in the casing 3, the external screen 21, applied to the outside of the casing 3, and the panel 12, applied to the shield 20.

The panels and the screen may be made of sound-blocking materials, such as sheets of expanded and non-expanded polyurethane, open cell materials, self-extinguishing materials, polyester fibers, coupled to lead plates and elastomeric masses and/or fire-resistant materials, for example of the REI type or the like.

Preferably, the materials used are self-extinguishing.

In practice it has been found that the invention achieves the intended aim and objects, by providing a junction box wherein the insulation means with sound-absorbing characteristics reduce the acoustic reflections on the internal surfaces of the box.

This application claims the priority of Italian Patent Application No. M12010A000562, filed on April 1, 2010, the subject matter of which is incorporated herein by reference.

## Claims

1. A wall mounted junction box, comprising a casing, a protective shield and a cover, **characterized in that** said box comprises insulating means having thermally insulating and/or sound-absorbing and/or fire-resistance characteristics, of the REI type or the like.

2. The wall mounted junction box according to claim 1, **characterized in that** said insulating means comprises an insulating panel applied to the internal side of said shield.

3. The wall mounted junction box according to claim 1 or 2, **characterized in that** said insulating means comprises an insulating panel which is applied to the inside of said cover.

4. The wall mounted junction box according to one or more of the preceding claims, **characterized in that** said insulating means comprises a screen constituted by a die-cut plate, which is shaped to be applied to the inside and/or to the outside of said casing.

5. The wall mounted junction box according to one or more of the preceding claims, **characterized in that** said insulating panel is made of a single material with sound-absorbing and/or thermal insulation and/or fire-resistance characteristics of the REI type or the like.

6. The wall mounted junction box according to one or more of the preceding claims, **characterized in that** said insulating panel is made of composite material.

7. The wall mounted junction box according to one or more of the preceding claims, **characterized in that** said insulating panel is made of self-extinguishing materials.

8. The wall mounted junction box according to one or more of the preceding claims, **characterized in that** said screen is made of self-extinguishing material and/or material with sound-absorbing and/or thermal insulation properties and/or fire-resistant materials, of the REI type or the like.

9. The wall mounted junction box according to one or more of the preceding claims, **characterized in that** it comprises, in combination, said screen, inserted in said casing, and said insulating panel applied to said shield.

10. The wall mounted junction box according to one or more of the preceding claims, **characterized in that** said panels are made of materials chosen among sound-blocking materials, such as sheets of expanded and non-expanded polyurethane, open cell materials, self-extinguishing materials, polyester fibers, coupled to lead plates and elastomer masses and/or fire-resistant materials, of the REI type or the like.
